# EUROPÄISCHE PATENTANMELDUNG

(11) **EP 1 564 085 A1**
(43) Veröffentlichungstag der Anmeldung: **17.08.2005**
(21) Anmeldenummer: 05002241.7
(22) Anmeldetag: 17.07.2002
(51) Int. Cl.: B60R 21/20

(54) **Beifahrerairbageinrichtung**

(30) Priorität: 24.07.2001 DE 10135224
(62) Teilanmeldung aus: 02791458.9
(71) Anmelder: Intier Automotive Eybl Interiors GmbH, 94315 Straubing (DE)
(72) Erfinder: Böller, Manfred, 93492 Treffelstein (DE); Christoph, Erich, 63179 Obertshausen (DE); Kusebauch, Rolf, 94345 Aholfing (DE)

(57) **Zusammenfassung**

Die Erfindung betrifft eine mit einem Beifahrerairbagmodul (22) kombinierte Instrumententafel (16) und ein Verfahren zu deren Herstellung. Die Instrumententafel hat einen formsteifen Trägerteil (10), eine das Trägerteil (10) vorderseitig zum Innenraum (20) des Kraftfahrzeugs überdeckende Dekorhaut (12) und eine zwischen Dekorhaut (12) und Trägerteil (10) liegende geschäumte Zwischenschicht (14). Zur Vereinfachung der Herstellung und Erhöhung der Funktionssicherheit wird vorgeschlagen, dass das Trägerteil (10) für den Gassack (28) des Airbagmoduls (22) eine Durchlassöffnung (30) aufweist, die gegenüber der Zwischenschicht (14) durch ein an ihrem Öffnungsrand (36) abgestütztes vorgefertigtes Verschlussteil (32) aus Kunststoff mit einer Dichte von 0,05 bis 0,5 g/cm³, vorzugsweise aus einem Hartschaum mit einer Dichte von 0,05 bis 0,2 g/cm³, abgedeckt ist.

## Beschreibung

Die Erfindung betrifft eine Anordnung zur Innenausstattung eines Kraftfahrzeugs, insbesondere eine mit einem Beifahrerairbagmodul versehene Instrumententafel nach dem Oberbegriff des Patentanspruchs 1.

Bei bekannten Instrumententafeln ist das Airbagmodul üblicherweise hinter dem Trägerteil an einem Fahrzeugquerträger befestigt und dazu ausgebildet, den Gassack über einen Schusskanal mit hoher Entfaltungsgeschwindigkeit durch eine Aufreißpartie der Instrumententafel hindurch in den Fahrgastraum zu entfalten. Hierzu wird das flächig geschlossene Trägerteil mit Ausfräsungen versehen, welche eine Sollbruchlinie definieren. Problematisch hierbei ist, dass eine gewisse Festigkeit gegen fahrgastseitig auf die Instrumententafel ausgeübte Druckbelastungen im Normalbetrieb gewährleistet sein muss, wodurch umgekehrt auch die Durchbrechfestigkeit gegenüber dem Airbag definiert wird. Dies bedingt, dass ein herkömmlich gefalteter Gassack über einen engen Schusskanal mit vergleichsweise großer Energie entfaltet wird, um den vorgesehenen Materialbruch an der Sollbruchlinie zu gewährleisten, was besonders bei einer Fehlpositionierung des Beifahrers zu einer ungewollten Gefährdung führen kann. Ein weiterer Nachteil eines tief hinter das Trägerteil greifenden Airbagmoduls liegt in dem verlorenen Bauraum für Einbauten wie das Handschuhfach.

Um hier Abhilfe zu schaffen, wurde bereits vorgeschlagen, zumindest den Gassack der Airbagvorrichtung als Faltpaket im Zwischenbereich zwischen dem Trägerteil und der Dekorhaut zu integrieren. Auch hierbei wird der Airbag unsichtbar eingebaut und es muss der Forderung genügt werden, dass sich zu keiner Zeit auch bei extremen klimatischen Beanspruchungen irgendwelche sichtseitigen Veränderungen auf der Instrumententafel abzeichnen.

Ein weiteres Problem dieser Bauform liegt darin, dass die Funktionssicherheit des Airbags nachträglich nur schwer überprüft werden kann, da er unzugänglich in der Instrumententafel eingeschäumt ist. Aus Sicherheitsgründen kann es erforderlich sein, den explosiv arbeitenden Gasgenerator erst in einer späten Stufe der Fahrzeugassemblierung gesondert anzubringen, was den Fertigungsprozess und die Möglichkeiten zur Funktionsprüfung erheblich beeinträchtigt.

Ausgehend hiervon besteht die Aufgabe der Erfindung darin, die vorstehend geschilderten Nachteile zu vermeiden und eine Anordnung und ein Verfahren der eingangs angegebenen Art dahingehend zu verbessern, dass eine hohe Funktionssicherheit gewährleistet ist, die Herstellung vereinfacht wird und bei kompakter Bauform keine störenden Veränderungen an der Innenausstattung auftreten.

Zur Lösung dieser Aufgabe wird die im Patentanspruch 1 bzw. 23 angegebene Merkmalskombination angegeben. Vorteilhafte Ausgestaltungen und Weiterbildungen der Erfindung ergeben sich aus den abhängigen Ansprüchen. In vorrichtungsmäßiger Hinsicht wird nach der Erfindung vorgeschlagen, dass das Trägerteil eine Durchlassöffnung für den Gassack aufweist, und dass die Durchlassöffnung durch ein an ihrem Öffnungsrand abgestütztes vorgefertigtes Verschlussteil gegenüber der Zwischenschicht abgedeckt ist.

Damit wird das Ausschäumen der Zwischenschicht frei von dem Airbagmodul möglich, welches somit beim Schäumvorgang auch nicht beschädigt wird. Das Verschlussteil kann dem Schäumdruck ohne störende Kompressionsvorgänge standhalten, und es wird eine dauerhaft konturstabile Abstützung der Zwischenschicht und Dekorhaut erreicht. Zugleich ermöglicht das Verschlussteil einen großflächigen Durchlass des Gassacks mit geringem Entfaltungsdruck und ohne wesentliche Beeinträchtigung der Strukturstabilität.

Vorteilhafterweise ist das Airbagmodul als komplette Baueinheit an dem Trägerteil des vorgefertigten Innenausstattungsteils angeflanscht, so dass eine unabhängige Airbagmontage als vorgeprüfte Einheit und gegebenenfalls ein nachträglicher Austausch möglich ist. Weitere Verbesserungen in dieser Hinsicht werden dadurch erreicht, dass das Trägerteil im Bereich des Öffnungsrandes der Durchlassöffnung als Flansch für das Airbagmodul ausgebildet ist, und dass das Airbagmodul über vorzugsweise lösbare Verbindungsmittel wie Schrauben oder Clipse an dem Flansch gehaltert ist.

Eine Ausführung in besonders kompakter Bauform sieht vor, dass das Verschlussteil zugleich eine gegen den Gassack anliegende und diesen somit in Entfaltungsrichtung überdeckende Abdeckung für das Airbagmodul bildet.

Für eine zusätzliche Erhöhung der Strukturfestigkeit ist es günstig, wenn das Verschlussteil an seiner von der Zwischenschicht abgewandten Rückseite zumindest bereichsweise an einem Gehäuseteil des Airbagmoduls flächig abgestützt ist.

Um neben vorteilhaften Funktionseigenschaften auch eine geringe Bautiefe zu erreichen, ist es von Vorteil, wenn der Gassack im gefalteten Zustand eine einzelne, an den lichten Querschnitt der Durchlassöffnung angepasste Decklage und einen randseitig daran anschließenden, vorzugsweise ringförmig umlaufenden Faltwulst aufweist. Entsprechend sollte das Airbagmodul eine Ringwanne zur Aufnahme des Gassacks aufweisen, wobei sich das Verschlussteil rückseitig unter Überbrückung der Ringwannenöffnung auf einer Zentralplatte der Ringwanne abstützen lässt.

Eine weitere vorteilhafte Ausführung sieht vor, dass das Verschlussteil gegen von dem Innenraum her einwirkende Belastungen an dem Öffnungsrand über einen Formschluss umlaufend abgestützt ist. Zugleich lassen sich damit geringe Öffnungskräfte für die Entfaltung des Airbags erreichen. Das Verschlussteil kann vorteilhaft über einen umlaufenden Randfalz oder einen hintergreifenden Formschluss mit dem Öffnungsrand in Eingriff stehen.

Dabei ist es günstig, wenn das Verschlussteil im Bereich der Durchlassöffnung eine vorzugsweise flächenbündig an das Trägerteil anschließende Widerlagerfläche für die Zwischenschicht bildet.

Vorteilhafterweise ist das Verschlussteil unter dem Entfaltungsdruck des Gassacks im Verbund mit der Zwischenschicht von der Durchlassöffnung weg in Richtung des Fahrzeuginnenraums abklappbar. Um eine Gefährdung der Fahrzeuginsassen zu verhindern, sollte das Verschlussteil über eine Stoffschlussverbindung zumindest stellenweise fest mit der Zwischenschicht verbunden sein. Denkbar ist es auch, dass das Verschlussteil über eine Primerschicht mit der Zwischenschicht verklebt ist, und dass die mit der Zwischenschicht verbundene Oberfläche des Verschlussteils durch Erhöhungen und/oder Vertiefungen vergrößert ist. Gegebenenfalls kann das Verschlussteil mit unter Belastung durch den Gassack abknickenden Schwächungsstellen versehen sein.

Eine weitere vorteilhafte Ausführung sieht vor, dass im Bereich der Durchlassöffnung eine Aufreißperforation durch das Verschlussteil hindurch in die Zwischenschicht eingebracht ist. Die Perforation kann auf diese Weise ohne Beeinträchtigung des Airbags oder nennenswerte Reduzierung der Bauteilstabilität vorgenommen werden. Der Verlauf der Schwächungslinie kann im Bereich des Verschlussteils unabhängig von dessen randseitigem Anschluss weitgehend beliebig gewählt werden, und es ist im Auslösefall kein Materialbruch im Trägerteil erforderlich. Eine weitere Verbesserung wird dadurch erreicht, dass die Dekorhaut eine mit der Aufreißperforation der Zwischenschicht fluchtende rückseitige Hautschwächung aufweist. Zur Bildung eines klappenartigen Aufreißbereichs kann die Aufreißperforation und/oder die Hautschwächung U- oder H-förmig verlaufen.

Um die durch den Gassack bewegte Masse zu reduzieren, sollte das Verschlussteil aus einem Kunststoff mit einer Dichte von 0,05 bis 0,5 g/cm³, vorzugsweise bis 0,2 g/cm³ bestehen. Eine weitere Verbesserung sieht vor, dass das Verschlussteil als gegebenenfalls weichelastisches Schaumformteil ausgebildet ist und insbesondere aus Partikelschaum-Kunststoff, wie expandierbarem Polypropylen, oder aus Polyurethan-Schaumstoff oder aus Polymethacrylimid (PMI) -Schaumstoff besteht. Eine weitere vorteilhafte Variante sieht vor, dass das Verschlussteil eine Wandstärke im Bereich von 3 mm bis 10 mm aufweist.

In verfahrensmäßiger Hinsicht wird die eingangs genannte Aufgabe erfindungsgemäß dadurch gelöst, dass eine in das Trägerteil eingebrachte Durchlassöffnung für den Gassack des Airbagmoduls durch ein vorgefertigtes Verschlussteil gegenüber dem auszuschäumenden Hohlraum des Schäumwerkzeugs abgedeckt wird. Weitere vorteilhafte Maßnahmen sehen vor, dass das Verschlussteil als Schaumformteil vorzugsweise aus einem Partikelschaum-Kunststoff oder Polyurethan-Schaumstoff oder Polymethacrylimid (PMI)-Schaumstoff vorgefertigt wird, und dass die Zwischenschicht während des Schäumvorgangs in dem Schäumwerkzeug klebend an das Verschlussteil angeschäumt wird.

Um die Herstellung einer Aufreißpartie zu vereinfachen, sieht eine bevorzugte Ausgestaltung vor, dass die Zwischenschicht von der Rückseite des Trägerteils her im lichten Querschnittsbereich der Durchlassöffnung durch das Verschlussteil hindurch mit einer Aufreißperforation versehen wird. Dabei kann die linienförmig verlaufende Aufreißperforation durch das Verschlussteil hindurch eingeschnitten oder eingefräst werden.

Eine weitere Optimierung des Fertigungsprozesses wird dadurch erreicht, dass das Airbagmodul als komplette Baueinheit rückseitig an das Trägerteil des fertiggestellten Innenausstattungsteils angeflanscht wird.

Im Folgenden wird die Erfindung anhand eines in der Zeichnung in schematischer Weise dargestellten Ausführungsbeispiels näher erläutert. Es zeigen
- Fig. 1: eine mit einem Beifahrerairbag versehene Kraftfahrzeuginstrumententafel in einem beifahrerseitigen Ausschnitt in schaubildlicher ausschnittsweisen Darstellung von der Innenraumseite; und
- Fig. 2: einen abgebrochenen Querschnitt durch die Instrumententafel mit rückseitig angeflanschtem Beifahrerairbag entlang der Schnittlinie 2-2 der Fig. 1.

Die in der Zeichnung dargestellte Anordnung besteht im wesentlichen aus einer ein rückseitiges formsteifes Trägerteil 10, eine sichtseitige Dekorhaut 12 und eine dazwischenliegende geschäumte Zwischenschicht 14 umfassenden Instrumententafel 16 als Innenausstattungsteil eines Kraftfahrzeugs und einem an der Rückseite 18 des Trägerteils 10 vom Innenraum 20 aus unsichtbar angeordneten Airbagmodul 22, welches ein Gehäuse 24, einen Gasgenerator 26 und einen damit aufblasbaren gefalteten Gassack 28 umfasst.

Das im Spritzgussverfahren aus einem schlagzähen Kunststoff (beispielsweise glasfaserverstärktem Polycarbonat) hergestellte Trägerteil 10 ist mit einer Durchlassöffnung 30 für den Gassack 28 versehen. Diese ist durch ein gesondert vorgefertigtes Verschluss- bzw. Deckelteil 32 gegenüber der Zwischenschicht 14 abgedeckt. Dabei steht das Verschlussteil 32 über einen umlaufenden Randfalz 34 mit dem die Durchlassöffnung 30 umgebenden Öffnungsrand 36 des Trägerteils 10 in Eingriff, so dass das Verschlussteil gegen innenraumseitige Belastungen abgestützt ist. Denkbar ist auch eine hintergreifende Formschlussverbindung beispielsweise über eine Ringnut.

Das Verschlussteil 32 besteht aus einem Kunststoff von geringer Dichte und ist vorzugsweise als Schaumformteil aus einem Partikelschaum-Kunststoff, insbesondere expandierbarem Polypropylen oder aus Polyurethan-Schaumstoff oder aus Polymethacrylimid (PMI)-Schaumstoff gebildet.

An seiner von dem Airbagmodul 22 abgewandten Vorderseite ist das Verschlussteil 32 stoffschlüssig mit der Zwischenschicht 14 verbunden. Die Verbindungsfläche 40 bildet dabei eine flächenbündig an die Vorderseite 42 des Trägerteils 10 anschließende Widerlagerfläche für die Zwischenschicht 14 und die sichtseitig damit verbundene Dekorhaut 12. Um die Verbindung zu verbessern, ist die Verbindungsfläche 40 mit in die angeschäumte Zwischenschicht 14 ragenden Erhöhungen 44 versehen.

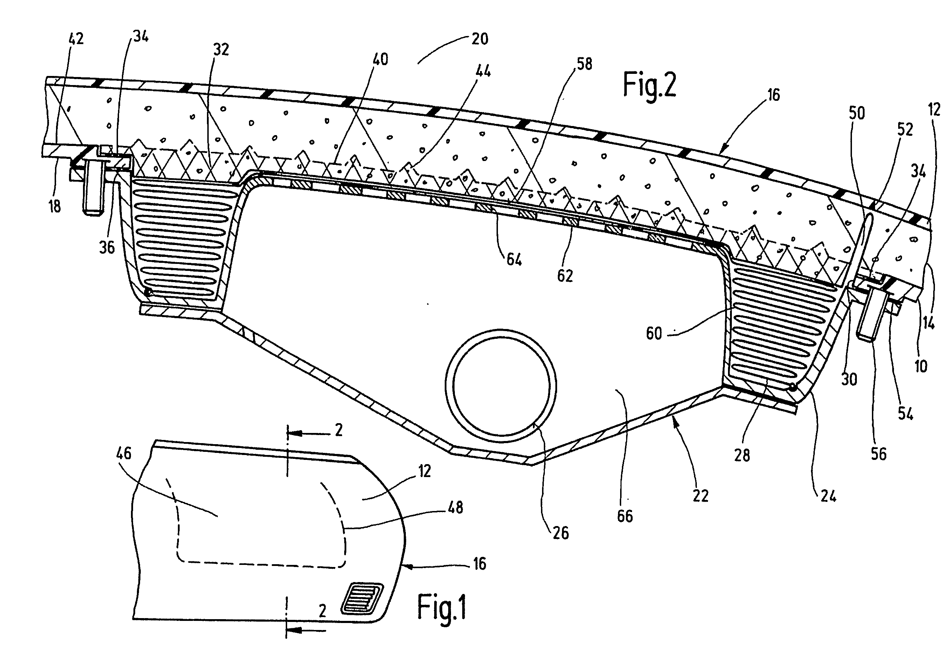

Im Auslösefall wird gemäß Fig. 1 unter dem Entfaltungsdruck des Gassacks 28 eine über der Durchlassöffnung 30 liegende Aufreißpartie 46 der Instrumententafel 16 klappenartig aufgerissen. Die Aufreißpartie 46 ist durch eine U-förmige Schwächungslinie 48 definiert. Entlang dieser Schwächungslinie 48 verläuft eine Aufreißperforation 50, die im Randbereich der Durchlassöffnung 30 durch das Verschlussteil 32 hindurch in die Zwischenschicht 14 eingebracht ist. Entsprechend weist die Dekorhaut 12 eine mit der Aufreißperforation 50 in Aufklapprichtung fluchtende rückseitige Hautschwächungslinie 52 auf. Um die Funktionssicherheit zu erhöhen, kann das Verschlussteil mit weiteren, unter Belastungen durch den Gassack 28 knickenden Schwächungsstellen versehen sein (nicht gezeigt). Das Airbagmodul 22 lässt sich als komplette Baueinheit rückseitig an dem Trägerteil 10 der gesondert hergestellten Instrumententafel 16 anbringen. Zu diesem Zweck weist das Trägerteil 10 einen zugleich den Öffnungsrand 36 der Durchlassöffnung 30 bildenden ringförmigen Montageflansch 54 auf.

Daran ist über Schraubverbindungen 56 das Gehäuse 24 des Airbagmoduls 22 zweckmäßig austauschbar gehaltert. Um ein großes Entfaltungsvolumen bei möglichst geringer Entfaltungsgeschwindigkeit zu erreichen, besitzt der Gassack 28 eine einzelne, größenmäßig an den lichten Querschnitt der Durchlassöffnung 30 angepasste Decklage 58 und einen randseitig daran anschließenden Ringfaltwulst 60. Zu dessen Aufnahme ist das Gehäuse 24 formkomplementär als Ringwanne ausgebildet. Dabei stützt eine von der Decklage 58 überspannte Zentralplatte 62 der Ringwanne 24 das Verschlussteil 32 zentral ab, so dass nur der offene Ringwannenbereich von dem Verschlussteil 32 frei überbrückt wird.

Die Zentralplatte 62 ist mit einer Vielzahl von Ausblasöffnungen 64 versehen, durch welche das im Gasgenerator 26 erzeugte und über den Innenraum 66 verteilte Gas großflächig hindurchströmt. Die vorstehend beschriebene, prinzipiell auch bei anderen Innenausstattungsteilen in Fahrzeugen denkbare Anordnung bietet neben einer raumsparenden kompakten Bauform die Möglichkeit zu einer einfachen und wirtschaftlichen Herstellung. Dabei wird die Dekorhaut 12 in an sich bekannter Weise im Pulversinterverfahren aus einem geeigneten Kunststoffpulver geformt.

Anschließend lässt sich die Hautschwächungslinie 52 mit einer Schneidvorrichtung rückseitig in die Formhaut 12 so einschneiden, dass sichtseitig keine Veränderungen erkennbar sind.

Das Trägerteil 10 und das Verschlussteil 32 werden in gesonderten Arbeitsgängen entsprechend der gewünschten räumlichen Kontur der Instrumententafel 10 gefertigt.

Sodann lässt sich die Formhaut durch Einschäumen der beispielsweise aus Polyurethanschaum gebildeten Zwischenschicht 14 auf das Trägerteil 10 aufbringen. Hierzu wird das Verschlussteil 32 in die Durchlassöffnung 30 des Trägerteils 10 eingesetzt und in eine Formhälfte eines Schäumwerkzeugs eingelegt.

Wichtig dabei ist ein allseitig bündiger Konturanschluss bzw. Übergang zwischen dem Verschlussteil und dem Trägerteil. Die Dekorhaut 12 wird in die andere Formhälfte eingelegt, und der zwischen den Formwänden freigehaltene Werkzeughohlraum wird bei geschlossenen Formhälften ausgeschäumt.

Beim Schäumvorgang wird die Zwischenschicht 14 vollflächig klebend mit der Dekorhaut 12 einerseits und mit der durch das Trägerteil 10 und das Verschlussteil 32 gebildeten Stützfläche 40, 42 andererseits fest verbunden.

Die Instrumententafel 16 lässt sich nach der Entnahme aus dem Schäumwerkzeug mit der zu der Hautschwächungslinie 52 korrespondierenden Aufreißperforation 50 versehen. Zu diesem Zweck wird die Zwischenschicht von der Rückseite 18 des Trägerteils 10 her im Querschnittsbereich der Durchlassöffnung 30 durch das Verschlussteil 32 hindurch eingefräst oder eingeschnitten. An der solchermaßen fertiggestellten Instrumententafel 16 lässt sich das Airbagmodul 22 als komplett geprüfte Baueinheit gegebenenfalls sogar erst im Zuge der Fahrzeugendmontage anflanschen, wobei auch ein späterer Austausch im Reparaturfall auf einfache Weise möglich ist.

Im Auslösefall entfaltet sich der Gassack 28 über die gesamte Fläche seiner Decklage 58, wobei das rückseitig beaufschlagte Verschlussteil 32 im Verbund mit der Zwischenschicht 14 und der Dekorhaut 12 im Bereich der Aufreißpartie 46 nach oben wegklappt und so eine Auslassöffnung für den Gassack in Richtung des Fahrgastraums 20 freigibt. Dabei ist durch die geringe Dichte des aus einem Schaumstoff bestehenden Verschlussteils 32 gewährleistet, dass die Sicherheit der Fahrzeuginsassen im Auslösefall nicht durch 5 schwere umherfliegende Verkleidungsteile gefährdet wird.

## Patentansprüche

1. Anordnung zur Innenausstattung eines Kraftfahrzeugs, insbesondere mit einem Beifahrerairbagmodul versehene Instrumententafel, mit einem aus einem rückseitigen formsteifen Trägerteil (10), einer vorderseitigen zum Innenraum (20) des Kraftfahrzeugs weisenden Dekorhaut (12) und einer zwischen Dekorhaut (12) und Trägerteil (10) liegenden, vorzugsweise geschäumten Zwischenschicht (14) bestehenden Innenausstattungsteil (16) und einem hinter dem Innenausstattungsteil verdeckt angeordneten, einen Gasgenerator (26) und einen damit aufblasbaren gefalteten Gassack (28) umfassenden Airbagmodul (22), wobei das Trägerteil (10) eine Durchlassöffnung (30) für den Gassack (28) aufweist und die Durchlassöffnung (30) durch ein an dem Öffnungsrand (36) abgestütztes vorgefertigtes Verschlussteil (32) gegenüber der Zwischenschicht (14) abgedeckt ist, **dadurch gekennzeichnet, dass** das Verschlussteil (32) aus einem Kunststoff mit einer Dichte von 0,05 bis 0,5 g/cm³, vorzugsweise von 0,05 bis 0,2 g/cm³ besteht.

2. Anordnung nach Anspruch 1, wobei das Verschlussteil (32) als gegebenenfalls weichelastisches Schaumformteil ausgebildet ist.

3. Anordnung nach Anspruch 1, wobei das Verschlussteil (32) aus Partikelschaum-Kunststoff, insbesondere expandierbarem Polypropylen oder aus Polyurethan-Schaumstoff oder aus Polymethacrylimid (PMI)-Schaumstoff besteht.

4. Anordnung nach einem der Ansprüche 1 bis 3, wobei das Verschlussteil (32) eine Wandstärke im Bereich von 3 mm bis 10 mm aufweist.

5. Anordnung nach einem der vorangehenden Ansprüche, wobei das Airbagmodul (22) als komplette Baueinheit an dem Trägerteil (10) des vorgefertigten Innenausstattungsteils (16) angeflanscht ist.

6. Anordnung nach einem der vorangehenden Ansprüche, wobei das Trägerteil (10) im Bereich des Öffnungsrandes (36) der Durchlassöffnung (30) als Flansch (54) für das Airbagmodul (22) ausgebildet ist.

7. Anordnung nach einem der vorangehenden Ansprüche, wobei das Airbagmodul (22) über vorzugsweise lösbare Verbindungsmittel (56) wie Schrauben oder Clipse an dem Flansch (54) gehaltert ist.

8. Anordnung nach einem der vorangehenden Ansprüche, wobei das Verschlussteil (32) zugleich eine gegen den Gassack (28) anliegende Abdeckung für das Airbagmodul (22) bildet.

9. Anordnung nach einem der vorangehenden Ansprüche, wobei das Verschlussteil (32) an seiner von der Zwischenschicht (14) abgewandten Rückseite zumindest bereichsweise an einem Gehäuseteil (62) des Airbagmoduls (22) flächig abgestützt ist.

10. Anordnung nach einem der vorangehenden Ansprüche, wobei der Gassack (28) im gefalteten Zustand eine einzelne, an den lichten Querschnitt der Durchlassöffnung (30) angepasste Decklage (58) und einen randseitig daran anschließenden, vorzugsweise ringförmig umlaufenden Faltwulst (60) aufweist.

11. Anordnung nach einem der vorangehenden Ansprüche, wobei das Airbagmodul (22) eine Ringwanne (24) zur Aufnahme des Gassacks (28) aufweist, und das Verschlussteil (32) rückseitig unter Überbrückung der Ringwannenöffnung auf einer Zentralplatte (62) der Ringwanne (24) aufliegt.

12. Anordnung nach einem der vorangehenden Ansprüche, wobei das Verschlussteil (32) gegen von dem Innenraum (20) her einwirkende Belastungen an dem Öffnungsrand (36) formschlüssig umlaufend abgestützt ist.

13. Anordnung nach einem der vorangehenden Ansprüche, wobei das Verschlussteil (32) über einen umlaufenden Randfalz (34) oder einen hintergreifenden Formschluss mit dem Öffnungsrand (36) in Eingriff steht.

14. Anordnung nach einem der vorangehenden Ansprüche, wobei das Verschlussteil (32) im Bereich der Durchlassöffnung (30) eine vorzugsweise flächenbündig an das Trägerteil (10) anschließende Widerlagerfläche (40) für die Zwischenschicht (14) bildet.

15. Anordnung nach einem der vorangehenden Ansprüche, wobei das Verschlussteil (32) unter dem Entfaltungsdruck des Gassacks (28) im Verbund mit der Zwischenschicht (14) von der Durchlassöffnung (30) weg in Richtung des Innenraums (20) abklappbar ist.

16. Anordnung nach einem der vorangehenden Ansprüche, wobei das Verschlussteil (32) über eine Stoffschlussverbindung zumindest stellenweise fest mit der Zwischenschicht (14) verbunden ist.

17. Anordnung nach einem der vorangehenden Ansprüche, wobei das Verschlussteil (32) über eine Primerschicht mit der Zwischenschicht (14) verklebt ist.

18. Anordnung nach einem der vorangehenden Ansprüche, wobei die mit der Zwischenschicht (14) verbundene Oberfläche des Verschlussteils (32) durch Erhöhungen (44) und/oder Vertiefungen vergrößert ist.

19. Anordnung nach einem der vorangehenden Ansprüche, wobei das Verschlussteil (32) mit unter Belastung durch den Gassack (28) abknickenden Schwächungsstellen versehen ist.

20. Anordnung nach einem der vorangehenden Ansprüche, wobei im Bereich der Durchlassöffnung (30) eine Aufreißperforation (50) durch das Verschlussteil (32) hindurch in die Zwischenschicht (14) eingebracht ist.

21. Anordnung nach Anspruch 20, wobei die Dekorhaut (12) eine mit der Aufreißperforation (50) der Zwischenschicht (14) fluchtende rückseitige Hautschwächung (52) aufweist.

22. Anordnung nach Anspruch 20 oder 21, wobei die Aufreißperforation (50) und/oder die Hautschwächung (52) zur Bildung eines klappenartigen Aufreißbereichs (46) U- oder H-förmig verläuft.

23. Verfahren zur Herstellung eines mit einem Airbagmodul (22) versehenen Innenausstattungsteils (16) für ein Kraftfahrzeug, insbesondere einer mit einem Beifahrerairbagmodul versehenen Instrumententafel, bei welchem ein formsteifes Trägerteil (10) und eine Dekorhaut (12) in einem Schäumwerkzeug über eine eingeschäumte Zwischenschicht (14) als Innenausstattungsteil (16) fest miteinander verbunden werden, wobei eine in das Trägerteil (10) eingebrachte Durchlassöffnung (30) für den Gassack (28) des Airbagmoduls (22) durch ein vorgefertigtes Verschlussteil (32) gegenüber dem auszuschäumenden Hohlraum des Schäumwerkzeugs abgedeckt wird, **dadurch gekennzeichnet, dass** das Verschlussteil (32) als Schaumformteil vorzugsweise aus einem Partikelschaum-Kunststoff, Polyurethan-Schaumstoff oder Polymethacrylimid (PMI)-Schaumstoff vorgefertigt wird.

24. Verfahren nach Anspruch 23, worin die Zwischenschicht (14) während des Schäumvorgangs in dem Schäumwerkzeug klebend an das Verschlussteil (32) angeschäumt wird.

25. Verfahren nach einem der Ansprüche 23 oder 24, worin die Zwischenschicht (14) von der Rückseite des Trägerteils (10) her im Bereich der Durchlassöffnung (30) durch das Verschlussteil (32) hindurch mit einer Aufreißperforation (50) versehen wird.

26. Verfahren nach Anspruch 25, worin die linienförmig verlaufende Aufreißperforation (50) durch das Verschlussteil (32) hindurch eingeschnitten oder eingefräst wird.

27. Verfahren nach einem der Ansprüche 23 bis 26, worin das Airbagmodul (22) als komplette Baueinheit rückseitig an das Trägerteil (10) des fertiggestellten Innenausstattungsteils (16) angeflanscht wird.
